# EUROPEAN PATENT APPLICATION

(11) **EP 4 350 712 A1**
(43) Date of publication of application: **10.04.2024**
(21) Application number: 22199863.6
(22) Date of filing: 05.10.2022
(51) Int. Cl.: G21C 3/32

(54) **A FILTER AND A FUEL ASSEMBLY FOR A NUCLEAR PLANT**

(71) Applicant: Westinghouse Electric Sweden AB, 721 63 Västerås (SE)
(72) Inventor: LINDSTRÖM, Kent, 722 43 Västerås (SE)
(74) Representative: Bjerkén Hynell KB

(57) **Abstract**

A filter (1, 1') for separating debris from a cooling liquid in a nuclear plant is described. The filter (1) comprises at least one passage (3) with an inner surface (5), an inlet end (2) and an outlet end (4), wherein the at least one passage (3) is arranged to permit through-flow of the cooling liquid in a main flow direction (MFD) from the inlet end (2) to the outlet end (4) for a cooling purpose in the nuclear plant. The inner surface (5) of the at least one passage (3) comprises at least one surface portion (7, 7') facing a sub flow direction (SFD) of the cooling liquid and comprising at least one surface irregularity (9, 9') arranged to catch the debris flowing in the cooling liquid in the sub flow direction (SFD), wherein the sub flow direction (SFD) is the opposite direction to the main flow direction (MFD). A fuel assembly (11, 11') for a nuclear plant, comprising a filter (1, 1') is also described.

## Description

### BACKGROUND OF THE INVENTION AND PRIOR ART

The present invention relates to a filter for separating debris from cooling liquid in a nuclear plant according to the preamble of claim 1. The invention also relates to a fuel assembly for a nuclear plant according to the preamble of claim 15.

In a nuclear plant, for example BWR, PWR or WER, it is important to filter the cooling liquid, such as cooling water, because debris that may be transported by the cooling water may cause defects to the cladding of the fuel rods of a fuel assembly (FA). Debris may also have reached the plant from the outside. Debris may consist of objects or metal chips or wires, which are formed, for example, at different repairs of components of the plant. Debris may also be particles that have potential to cause some defects. Defects may, for example be defect to the cladding of the fuel rods that may result in leaking nuclear fuel, i.e. release of uranium into the cooling water. At a larger defect, the operation of the reactor has to be interrupted and the failed fuel needs to be replaced. Such a replacement is time-consuming and expensive. Debris may also cause defects to other components in a nuclear plant, for instance pumps. Therefore, debris filters are used for filtering of cooling liquid.

Debris that have been captured in a debris filter are kept inside the filter by the continuous water flow through the filter. When a fuel assembly (FA), comprising a filter, eventually is unloaded out of the core, the direction of the water flow through the FA and thereby through the filter is reversed when the FA is lifted with the fuel handling machine. One problem that need to be considered is the risk that the downward water flow (relative to the FA) or water turbulences during transportation of the FA may rinse out debris captured in the debris filter and this loose debris may fall down onto or into the other FAs in the core and in spent fuel rack. This may then lead to fuel failures.

EP2062266B1 describes a device and a method for handling a fuel assembly. According to the document a pump is used to create a flow of water through the conduit member and the fuel assembly during a lifting operation for possible debris in a debris filter to be retained in the filter during the lifting operation.

EP2648188B1 discloses s a debris filter comprising bent plates.

Although the known solutions work well, there is a need of improved debris filter that can prevent debris to fall down from the filter, during lifting or transportation vertically or horizontally of a fuel assembly comprising the filter.

### SUMMARY OF THE INVENTION

The object of the present invention is to provide an improved debris filter for a nuclear plant, which filter is arranged to prevent debris captured in the filter to be rinsed out or to fall down from the filter during lifting of a fuel assembly comprising the filter or during transportation vertically or horizontally of the fuel assembly comprising the filter and thereby to reduce the risk that debris fall down onto or into other fuel assemblies located below or in the vicinity, which may cause damages.

The above-mentioned object is achieved by the filter defined in claim 1 and by the fuel assembly defined in claim 15.

Thus, the object is achieved by a filter for separating debris from a cooling liquid in a nuclear plant. The filter comprises at least one passage with an inner surface, an inlet end and an outlet end, wherein the at least one passage is arranged to permit through-flow of the cooling liquid in a main flow direction MFD from the inlet end to the outlet end for a cooling purpose in the nuclear plant.

Debris may consist of objects or metal chips or wires, which are formed, for example, at different repairs of components of the plant. Debris may also come into the cooling liquid from the outside. Debris may also be particles that have potential to cause some defects.

Each of the at least one passage forms a channel for the cooling liquid to permit the cooling liquid to flow along the passage from the inlet end to the outlet end during operation of the nuclear plant for a cooling purpose in the nuclear plane. Thus, the cooling liquid can be conveyed through the filter in a controlled manner through the at least one passage. The main flow direction MDF is a direction of the main flow of the cooling liquid following through the passage in a direction from the inlet end to the outlet end of the passage. Thus, the main flow direction may be defined as vectors along a line in the passage with a direction towards the outlet end of the passage, which line follows the shape of the passage. Because the shape of the at least one passage can vary, the main flow direction may be defined in a simple and accurate manner also for different shapes of the at least one passage.

The inner surface of the at least one passage comprises at least one surface portion facing a sub flow direction SFD of the cooling liquid and comprising at least one surface irregularity arranged to catch the debris flowing in the cooling liquid in the sub flow direction SFD, wherein the sub flow direction SFD is the opposite direction to the main flow direction MFD.

The sub flow direction SDF is a direction opposite to the main flow direction MFD and is a direction of the main stream of the cooling liquid following through the passage in a direction from the outlet end to the inlet end of the passage. Thus, the sub flow direction SFD can be defined as vectors along a line in the passage with a direction towards the inlet end of the passage, which line follows the shape of the passage. Because the shape of the at least one passage can vary, the sub flow direction SFD can be defined in a simple and accurate manner also for different shapes of the at least one passage.

The inner surface of the at least one passage is arranged such that the at least one surface portion faces the sub flow direction SFD. Thus, the surface portion faces at least one vector of the vectors along the line in the passage with the direction towards the inlet end of the passage.

The at least one surface irregularity of the surface portion is formed with purpose on the surface portion to catch debris flowing in the cooling liquid in the sub flow direction SFD. The at least one surface irregularity can have different forms and different designs.

The at least one surface portion may also be defined as a part or a portion of the inner surface of the at least one passage. Thus, the inner surface of the at least one passage comprises one or several surface portions each comprising the at least one surface irregularity. The surface of the at least one surface portion is a roughened surface because of the at least one surface irregularity of the surface portion. The surface portion is characterized by increased friction characteristics for debris flowing in the cooling liquid in the sub flow direction SFD comparing to the other sections of the inner surface of the passage that have not been provided with surface irregularities. The surface irregularities of the surface portion are arranged to minimize the flow resistance effects on the flow in the main flow direction MFD.

Consequently, the at least one surface irregularity forms a hurdle for debris flowing in the cooling liquid in the sub flow direction SFD. Thus, debris flowing in the cooling liquid in the sub flow direction can be stopped by the at least one surface irregularity and then can be captured in the filter.

Thereby, an improved filter for a nuclear plant is provided which filter has conditions to prevent debris captured in the filter to be rinsed out or to fall down from the filter during lifting or transportation of a fuel assembly comprising the filter. Thereby, risk that debris can fall down onto or into other fuel assemblies, which may cause damages, can be at least reduced. Consequently, the above-mentioned object is achieved.

Optionally, the at least one surface portion is provided with several surface irregularities. Several surface irregularities constitute an improved hurdle for the debris. Thus, conditions are provided for capturing debris flowing in the sub flow direction SFD in an improved manner.

Optionally, the surface irregularities are arranged in at least one row.

With a row is meant that the surface irregularities are arranged to follow an extension direction along the surface portion. The surface irregularities may be arranged in one row or several rows. Each row may be arranged with an angle, for example transversely, in relation to the sub flow direction SFD. By surface irregularities arranged in one row or in several rows, preferably transversely to the sub flow direction SFD, the probability to capture and hold the debris is increased. Thus, a yet improved filter is provided with improved capturing efficiency.

Optionally, the several surface irregularities are arranged one after another in the sub flow direction SFD.

In relation to a reference surface irregularity of the several surface irregularities, the surface irregularities may be arranged such that, another surface irregularity or plurality of other surface irregularities are arranged upstream and/or downstream the reference surface irregularity in the sub flow direction SFD. Thereby an improved filter is achieved because with surface irregularities arranged one after another the probability for capturing debris in the cooling liquid increases as the debris may be stopped at several surface irregularities in the sub flow direction SFD.

Optionally, the surface portion comprises at least one depression forming the at least one irregularity. Thus, the surface irregularities may be achieved in a simple manner by arranging depressions, or recesses, in the surface portion of the inner surface of the passage.

Optionally, the at least one depression comprises an elongated groove. With elongated groove is meant a slot or slit having extensions in direction substantially transversal to the sub flow direction SFD. The extension of each groove in the direction substantially transversal to the sub flow direction SFD may then be greater that the depth of the groove. By this, debris in the cooling liquid may be captured in an effective manner along the extensions of the grooves arranged, for example, substantially perpendicular in relation to the sub flow direction SFD.

Optionally, the at least one depression comprises a spot-like depression. With spot-like depression is meant that a depth of the depression can be equal or greater that the extension of the depression in a direction transversal to the sub flow direction SFD. With several spot-like depressions there is no connection between the spot like depressions unlike one continuous depression. Thus, the depressions may be arranged pointwise in the surface portion. Thereby depressions can be achieved with lower energy and material consumption during a process of creating the depressions and manufacturing of the filter.

Optionally, the surface portion comprises at least one protrusion forming the at least one irregularity. Thus, the surface portions can be achieved in a simple manner by arranging protrusions, i.e. units that extend out from the surface of the surface sections and that form traps for debris flowing in the cooling liquid. Thereby, thanks to the protrusions, the debris in the cooling liquid can be stopped in an efficient way.

Optionally, the at least one protrusion comprises an elongated ridge. The elongated ridges have an extension in directions orientated transversely to the sub flow direction SFD. The extension of each ridge in the direction transversal to the sub flow direction SFD can be greater than the height of the ridge. By this the debris in the cooling liquid can be caught in an effective manner along the extensions of the ridge in the direction transversal to the sub flow direction SFD.

Optionally, the at least one protrusion comprises a spot-lite protrusion. With spot-like protrusions is meant that a height of the protrusion can be equal or greater than the extension of the protrusion in a direction transversal to the sub flow direction SFD. With several spot-like protrusions there is no connection between the spot like protrusions unlike one continuous protrusion. Thus, the protrusions can be arranged pointwise on the surface portion. Thereby protrusions can be achieved with lower energy and material consumption during a process of creating the protrusions and manufacturing of the filter.

Optionally, the at least one irregularity is arranged angled towards the sub flow direction SFD. Thus, the at least one irregularity can be arranged to have a surface facing the sub flow direction SFD and being angled with an acute angle in relation to the inner surface of the at least one passage. As a result, conditions are provided for an efficient capturing of debris flowing in the sub flow direction SFD. Further, the at least one irregularity arranged angled towards the sub flow direction SFD contributes to a decrease of the breaking effect on the flow in the main flow direction MFD.

Optionally, the at least one surface portion has a bend along the sub flow direction SFD. The surface portion has a portion where the surface portion starts and a portion where the surface portion ends with reference to a flow along the sub flow direction. The bend along the sub flow direction SFD means that the portion where the surface portion ends is displaced in a direction perpendicular to the sub flow direction SFD and inwards the passage in relation to the portion where the surface portion starts. Thus, conditions are provided for a yet improved capturing of debris flowing in the sub flow direction SFD.

Optionally, the irregularities are manufactured by additive manufacturing. Additive manufacturing is sometimes called as 3d printing process. Thus, the irregularities can be manufactured in a cost- and time efficient manner.

Optionally, the at least one passage comprises at least one curvature along the extension of the at least one passage. The curvature is arranged such that the inner surface of the at least on passage comprises a portion that faces substantially the sub flow direction SFD and portions orientated substantially along the sub flow direction SFD. At the portions that face the sub flow direction the flow of the cooling liquid meets some resistance due to said portions facing the sub flow direction SFD. As a consequence, debris in the cooling liquid meet the resistance forces during passage of the cooling liquid.

According to a preferred embodiment, the at least one surface portion is, with advantage, arranged downstream the at least one curvature in the sub flow direction SFD. The at least one surface portion is arranged on the side of the inner surface of the at least one passage that faces the sub flow direction SFD (as a virtual vector) of the flow directly upstream the at least one curvature. Thus, the flow passing the at least one curvature in the sub flow direction SFD will encounter the at least one surface portion downstream the at least one curvature. As a result, improved conditions are provided for debris flowing in the sub flow direction SFD to get caught at the at least one surface portion by being effectively stopped by the at least one irregularity arranged downstream the at least one curvature taking advantage of the at least one curvature that forces debris towards the at least one surface portion.

A further object of the present invention is to provide an improved fuel assembly. Thus, the object is achieved by a fuel assembly for a nuclear plant, wherein the fuel assembly comprises a bottom part, a top part and a plurality of fuel rods arranged beside each other and with an interspace between each other and between the bottom part and the top part of the fuel assembly. The bottom part comprises a filter according to any one of the embodiments described herein. Because the fuel assembly comprises an improved filter an improved fuel assembly is provided. Thereby, the above-mentioned object is achieved.

Optionally, the filter and the bottom part are arranged to guide cooling liquid into the interspace.

### BRIEF DESCRIPTION OF THE DRAWINGS

In the following preferred embodiments of the invention are described with reference to the attached drawings, on which:
- Fig. 1: is a schematic illustration of a part of a filter with passages comprising a surface section comprising surface irregularities,
- Fig. 2: illustrates the surface irregularities of the surface section in Fig. 1 according to an embodiment,
- Fig. 3: illustrates the surface irregularities of the surface section in Fig. 1 according to a further embodiment,
- Fig. 4: is a cut view of a schematic fuel assembly for a BWR reactor comprising a filter according to an embodiment and
- Fig. 5: is a cut view of a schematic fuel assembly for a PWR reactor comprising a filter according to an embodiment.

### DETAILED DESCRIPTION OF PREFERRED EMBODIMENTS OF THE INVENTION

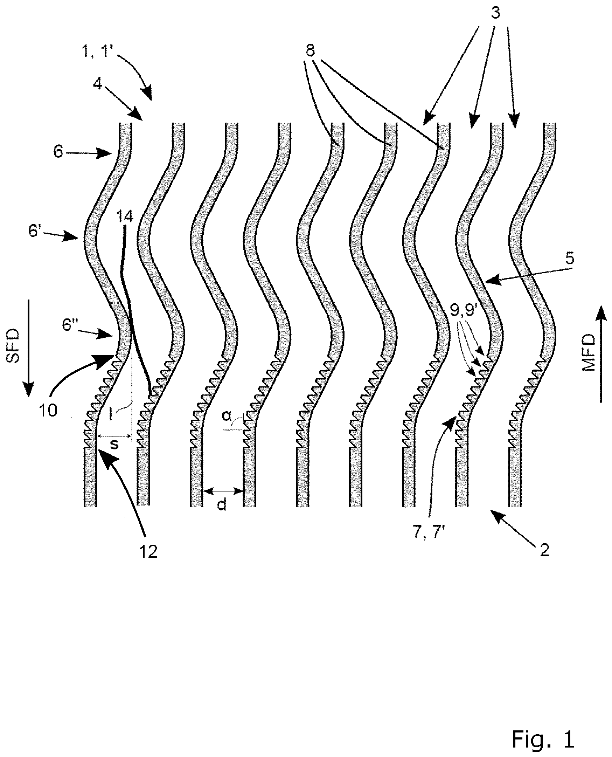

Fig. 1 shows, in a schematic way, a part of a filter 1, 1' for separating debris from a cooling liquid in a nuclear plant. The filter 1, 1' comprises a number of interconnected plates 8, which plates 8 form at least one passage 3 created between two adjacent plates 8. For simplicity, only some plates 8 and some passages 3 have been shown in the Fig. 1. However, the filter 1 may comprise several interconnected plates 8. The passages 3 are separated from each other and arranged beside each other by means of the plates 8. Preferably the plates are manufactured as thin sheets of a metallic material interconnected to each other, for example by welding or by additive manufacturing. Other suitable materials, for example ceramic materials may also be used for the plates 8.

The entire filter 1, 1' comprises outer side walls (not shown in Fig. 1) which outer side walls delimit the at least one passage on the sides of the at least one passage 3. Thereby the cooling liquid may be transported through the passages 3 in a controlled manner.

As shown in Fig 1, the plates 8 are arranged in parallel to each other with a distance d between two adjacent plates 8. The distance d may be equal between all the plates of the filter 1, 1' or the distance d may be different between the plates 8. Thus, the distance d between the plates 8 may vary and may be determined at a manufacturing step of the filter 1, 1'. As an effect, the size, i.e. the height or the width of the passages 3 may be adapted to different needs by adjusting the distance d between the plates 8.

As an alternative to the embodiments illustrated in Fig. 1, the at least one passage 3 may be formed by tubular units interconnected to each other in order to form a filter. The tubular units may for example be metallic pipes connected to each other by welding. The tubular units may be arranged such that the tubular units create one or several levels of interconnected tubular units forming a filter to enable the cooling liquid to flow through the passages arranged in one or several levels.

The filter 1, 1' is arranged for separating debris from a cooling liquid in a nuclear plant. The filter 1, 1' comprises at least one passage 3 with an inner surface 5, an inlet end 2 and an outlet end 4. The at least one passage 3 is arranged to permit through-flow of the cooling liquid in a main flow direction MFD from the inlet end 2 to the outlet end 4 for a cooling purpose in the nuclear plant. The inner surface 5 of the at least one passage 3 comprises at least one surface portion 7, 7' facing a sub flow direction SFD of the cooling liquid and comprising at least one surface irregularity 9, 9' arranged to catch the debris flowing in the cooling liquid in the sub flow direction SFD, wherein the sub flow direction SFD is the opposite direction to the main flow direction MFD.

In the Fig. 1 plates 8 with the inner surface 5 provided with the at least one surface portion 7, 7' are similar to each other and the presented references applies to all relevant details of the plates 8. For an easier interpretation of the figure the references are set in one place for respective detail.

According to the embodiments illustrated in Fig. 1, the surface portion 7, 7' has been provided with several irregularities 9, 9' arranged one after another in the sub flow direction SFD. Further, the irregularities 9, 9' has been formed as depressions made in the inner surface 5 of the at least one passage 3.

As an alternative, the at least one irregularity 9, 9' can be formed as at least one protrusion protruding from the inner surface 5 of the at least one passage 3.

The at least one irregularity 9, 9' can be arranged angled towards the sub flow direction SFD. Thus, the at least one irregularity 9, 9' can be arranged to have a surface facing the sub flow direction SFD and being angled with an acute angle α in relation to the inner surface 5 of the at least one passage 3.

As illustrated in Fig. 1, the at least one surface portion 7, 7' can have a bend along the sub flow direction SFD. The surface portion 7, 7' has a portion 10 where the surface portion 7, 7' starts and a portion 12 where the surface portion 7, 7' ends with reference to a flow along the sub flow direction SFD. The bend along the sub flow direction SFD means that the portion 12 where the surface portion 7, 7' ends is displaced in a direction perpendicular to the sub flow direction SFD and inwards the passage 3 in relation to the portion 10 where the surface portion 7, 7' starts. Thus, there is a distance s between a virtual extension I of the portion 10 where the surface portion 7, 7' starts and the portion 12 where the surface portion 7, 7' ends. Thereby, conditions are provided for a yet improved capturing of debris flowing in the sub flow direction SFD.

The at least one passage 3 may comprise at least one curvature 6 along the extension of the at least one passage 3. According to the embodiments illustrated in Fig. 1, the at least one passage 3 comprises three curvatures 6, 6' and 6" and the at least one surface portion 7, 7' is, arranged downstream the third curvature 6" counted along the sub flow direction SFD. Thus, the at least one surface portion 7, 7' is arranged downstream the at least one curvature 6 in the sub flow direction SFD and is arranged on the side of the inner surface 5 of the at least one passage 3 that faces the sub flow direction SFD (as a virtual vector) of the flow directly upstream the at least one curvature 6. Thus, the flow passing the at least one curvature 6 in the sub flow direction SFD will encounter the at least one surface portion 7, 7' downstream the at least one curvature 6. As a result, improved conditions are provided for debris flowing in the sub flow direction SFD to get caught at the at least one surface portion 7, 7' by being effectively stopped by the at least one irregularity 9, 9' arranged downstream the at least one curvature 6 taking advantage of the at least one curvature that forces debris towards the at least one surface portion 7, 7'.

In Fig. 1 an example debris 14 has been illustrated being caught at the at least one surface portion 7, 7' arranged downstream the at least one curvature 6.

As a possible example of a manufacturing process of the irregularities 9, 9', the irregularities 9, 9' can be manufactured by additive manufacturing that may also be called 3d printing process.

As illustrated in Fig. 1 the irregularities 9, 9' form small teeth on the inner surface 5 on the at least one passage 3.

The size of the irregularities 9, 9', i.e. the depth and/or height, for example, is in a range of 0,2 to1,5 mm.

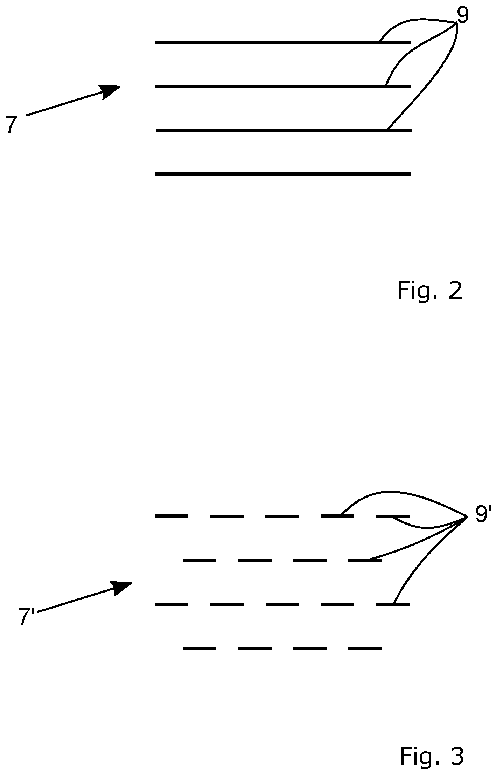

Fig. 2 illustrates the surface irregularities 9 of the surface section 7 illustrated in Fig. 1 according to an embodiment. As illustrated in Fig. 2, the surface irregularities 9 can be arranged in rows and can be arranged as continuous elongated depressions, for example, continuous elongated grooves and/or as continuous elongated protrusions, for example continuous elongated ridges.

Fig. 3 illustrates the surface irregularities 9' of the surface section 7' illustrated in Fig. 1 according to a further embodiment. As illustrated in Fig. 3, the surface irregularities 9' can be arranged as a spot-like depressions and/or as spot-lite protrusions that can be arranged in rows.

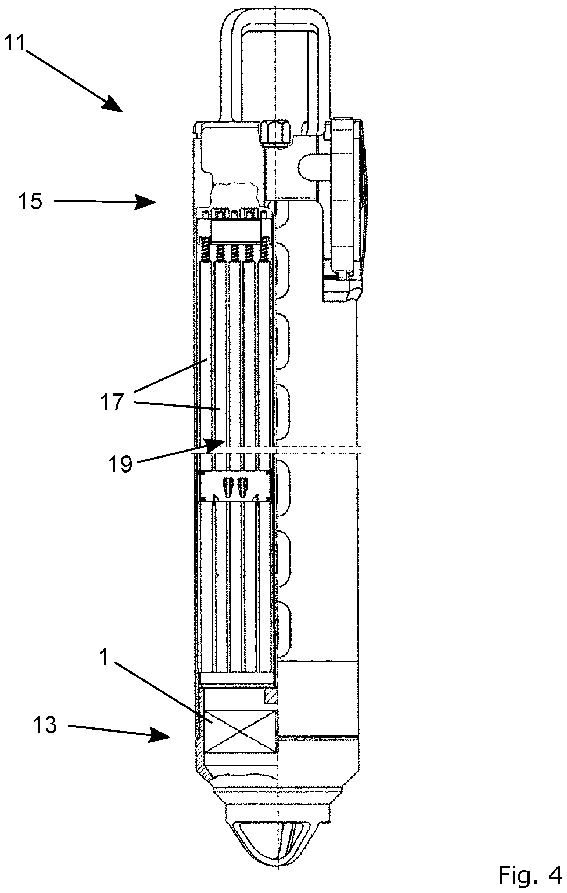

Fig. 4 is a cut view of a schematic fuel assembly 11 for a BWR reactor nuclear plant. The fuel assembly 11 comprises a bottom part 13', a top part 15 and a plurality of fuel rods 17 arranged beside each other and with an interspace 19 between each other and between the bottom part 13 and the top part 15 of the fuel assembly 11. The bottom part 13, 13' comprises a filter 1 according to any one of the embodiments described herein.

According to this embodiment, the filter 1 and the bottom part 13 are arranged to guide cooling liquid into the interspace 19.

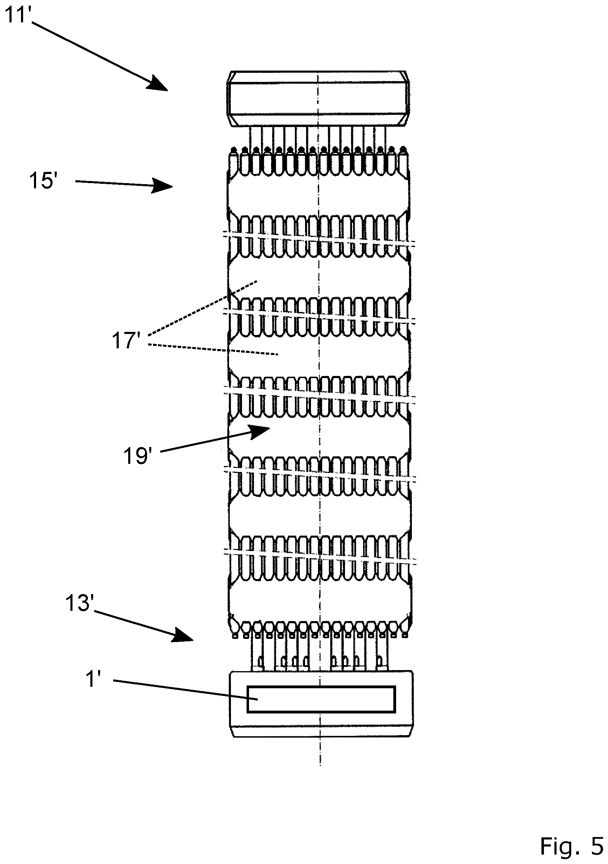

Fig. 5 is a cut view of a schematic fuel assembly 11' for a PWR reactor comprising a filter 1' according to an embodiment as described above in the specification. The reference signs in Fig. 5 designate the same or similar elements as in Fig. 4.

As an alternative, the filter 1, 1' can be installed in a WER-reactor.

The invention is not restricted to the described embodiment but may be varied freely at the scope of the claims.

## Claims

1. A filter (1, 1') for separating debris from a cooling liquid in a nuclear plant, wherein the filter (1) comprises at least one passage (3) with an inner surface (5), an inlet end (2) and an outlet end (4), wherein said at least one passage (3) is arranged to permit through-flow of the cooling liquid in a main flow direction (MFD) from the inlet end (2) to the outlet end (4) for a cooling purpose in the nuclear plant, **characterized in that** the inner surface (5) of the at least one passage (3) comprises at least one surface portion (7, 7') facing a sub flow direction (SFD) of the cooling liquid and comprising at least one surface irregularity (9, 9') arranged to catch said debris flowing in the cooling liquid in said sub flow direction (SFD), wherein the sub flow direction (SFD) is the opposite direction to the main flow direction (MFD).

2. The filter (1, 1') according to claim 1, **characterized in that** said at least one surface portion (7, 7') is provided with several surface irregularities (9, 9').

3. The filter (1, 1') according to claim 2, **characterized in that** said several surface irregularities (9, 9') are arranged in at least one row.

4. The filter (1, 1') according to claim 2 or 3, **characterized in that** said several surface irregularities (9, 9') are arranged one after another in the sub flow direction (SFD).

5. The filter (1, 1') according to any of claims 1 to 4, **characterized in that** said surface portion (7, 7') comprises at least one depression forming said at least one irregularity (9, 9').

6. The filter (1, 1') according to claim 5, **characterized in that** said at least one depression comprises an elongated groove (9).

7. The filter (1, 1') according to claim 5 or 6, **characterized in that** said at least one depression comprises a spot-like depression (9').

8. The filter (1, 1') according to any of claims 1 to 7, **characterized in that** said surface portion (7, 7') comprises at least one protrusion forming said at least one irregularity (9, 9').

9. The filter (1, 1') according to claim 8, **characterized in that** said at least one protrusion comprises an elongated ridge (9).

10. The filter (1, 1') according to claim 8 or 9, **characterized in that** said at least one protrusion comprises a spot-lite protrusion (9').

11. The filter (1, 1') according to any one of claims 1 to 8, **characterized in that** said at least one irregularity (9, 9') is arranged angled towards said sub flow direction (SFD).

12. The filter (1, 1') according to any of claims 1 to 9, **characterized in that** the at least one surface portion (7, 7') has a bend along the sub flow direction (SFD).

13. The filter (1, 1') according to any of claims 1 to 10, **characterized in that** the irregularities (9, 9') are manufactured by additive manufacturing.

14. The filter (1, 1') according to any of claims 1 to 12, **characterized in that** the at least one passage (3) comprises at least one curvature (6) along the extension of the at least one passage (3).

15. A fuel assembly (11, 11') for a nuclear plant, wherein the fuel assembly (11, 11') comprises a bottom part (13, 13'), a top part (15, 15') and a plurality of fuel rods (17, 17') arranged beside each other and with an interspace (19, 19') between each other and between the bottom part (13, 13') and the top part (15, 15') of the fuel assembly (11, 11'), **characterized in that** the bottom part (13, 13') comprises a filter (1, 1') according to any one of the claims 1 to 12.
